Europäisches Patentamt

European Patent Office

Office européen des brevets

(19)

(11) Publication number: **0 099 643 B1**

# EUROPEAN PATENT SPECIFICATION

(12)

(45) Date of publication of patent specification: **04.09.91**

(51) Int. Cl.⁵: **G01S 15/02, C08L 75/08, C08L 9/02, C08L 33/08, C08L 23/34, C08L 31/04, C08L 23/08, C08L 27/16, C08L 27/20**

(21) Application number: **83303442.4**

(22) Date of filing: **14.06.83**

(54) Sonar systems comprising high damping polymer compositions.

(30) Priority: **15.06.82 US 388763**

(43) Date of publication of application:
**01.02.84 Bulletin 84/05**

(45) Publication of the grant of the patent:
**04.09.91 Bulletin 91/36**

(84) Designated Contracting States:
**AT BE CH DE FR IT LI NL SE**

(56) References cited:
**CA-A- 980 936
DE-A- 3 131 359
GB-A- 1 317 814
US-A- 3 980 595
US-A- 4 096 200**

**PATENTS ABSTRACTS OF JAPAN; vol. 7, no. 37 (M-193)[1182], 15th February 1983; & JP - A - 57 188 334 (TAKEDA YAKUHIN KOGYO K.K.) 19-11-1982**

(73) Proprietor: **RAYCHEM CORPORATION (a Delaware corporation)
300 Constitution Drive
Menlo Park, California 94025(US)**

(72) Inventor: **Lally, Thomas Patrick
100 East Middlefield No. 6
Mountain View California 94304(US)**

(74) Representative: **Jay, Anthony William et al
Raychem Limited Intellectual Property Law
Department Faraday Road
Dorcan Swindon Wiltshire(GB)**

## Description

This invention relates to sonar detection apparatus.

Many navies throughout the world employ sonar detection arrays to locate and identify vessels at sea. These arrays, which may be 100 meters or more in length, are towed behind a ship by a towline and are isolated from the towline by a vibration isolation module. A detection array typically comprises a series of sensing sections, each of which is for example 15 to 30 metres in length. Each sensing section comprises a plurality of hydrophones (located at precise distances from one another), together with the necessary ancillary electronic components, inside a semi-rigid tubular jacket, typically 2 to 10 centimetres in diameter. The tubing is filled with an acoustically transparent fluid, typically a mixture of aliphatic hydrocarbons (although silicone fluids have been proposed), to improve the acoustic coupling between the hydrophones and the water surrounding the tubing.

The tubing often contains, embedded in the wall and running parallel to the longitudinal axis, reinforcing yarn. The main reason for this is to provide the tubing with a very high modulus in the longitudinal direction; if the tubing is readily extensible, this can upset the critical spacing of the hydrophones and can create turbulence, and hence noise, in the acoustic fluid.

It will be readily apparent that a high sensitivity of detection is desirable and that since this sensitivity is partly determined by the signal-to-noise ratio reaching the hydrophones, it is advantageous to reduce the acoustic noise generated within or by the array. As the array is pulled through the water, noise is generated from three separate mechanical excitations. The first is towline excitation originating either at the vessel or as towline strumming due to vortex shedding. The second is a tail end effect; array tension is low and the array may be susceptible to 'snaking' instability. The third, and most important, noise source is the turbulent boundary layer (TBL) which develops as the array is drawn through water. The way in which the TBL creates noise is by generating bulge waves (either resonant or non-resonant). The entire success of towed arrays depends on the isolation of the hydrophones from these surface pressures (whose spectral level increases as the fourth power of speed).

It is desirable, then, to use a tubing which provides for maximum transmission of the acoustic signals that the sensors are attempting to detect but which minimizes the noise created by the array. One way of significantly reducing noise is to use a material exhibiting high mechanical damping. It is also important that the material should not be too flexible, as this will more readily permit the generation of bulge waves. Secondary considerations include the density of the material, abrasion resistance, resistance to the fill fluids and water, low temperature flexibility, creep resistance, the ability to take a good surface finish, and (for economic reasons) the ability to manufacture in continuous lengths.

Materials used in the past for jacketing sonar detection arrays include plasticised polyvinyl chloride (PVC) and various rubbers, e.g. butyl rubber and nitride rubber. However, the rubbers suffer from disadvantages such as poor processing characteristics (especially for long lengths), poor abrasion resistance, insufficient stiffness, excessive weight and insufficient solvent resistance. Plasticised PVC can be easily processed, but is too stiff at low temperatures and the plasticiser is leached out by the acoustic fluids.

The present invention provides sonar detection apparatus suitable for towing behind a ship comprising:

(1) a longitudinally reinforced tube composed of a radiation cross-linked polymeric composition comprising:

(a) from 40 to 70 percent by weight, based on the total polymer, of an elastomer having a glass transition temperature of from -40°C to +15°C; and

(b) from 60 to 30 percent by weight, based on the total polymer, of a segmented urethane block polymer.

the composition having a damping coefficient of at least 0.1 at at least one frequency in the range from 1 Hz to 100 Hz at at least one temperature in the range from 0°C to 25°C;

(2) a plurality of hydrophones within said tube; and

(3) an acoustic coupling fluid between the tube and the hydrophones.

Glass transition temperatures given herein are measured by means of a differential scanning calorimeter.

The composition used to form the tube has been radiation crosslinked to improve its abrasion and solvent resistance, modulus and other mechanical properties. The radiation dose, which may be for example 5-15 megarads, should not be too high, however, because the effect of crosslinking is usually to lower the damping coefficient. Preferably the elastomer and polyurethane are chosen so that the radiation causes crosslinking of the elastomer, but does not substantially crosslink the polyurethane.

The performance of a particular tubing in a sonar detection apparatus depends not only on the

2

composition used for the tubing but also the dimensions of the tubing. Typical dimensions for such tubing are an outer diameter of 2 to 10 cm and a wall thickness which is from 2 to 8 mm and from 0.05 to 0.15 times the outer diameter. For tubing of such dimensions, standardized measurements of damping coefficients and modulus values of test specimens of the compositions provide an excellent guide to the value of the compositions in practical sonar detection apparatus. The damping coefficients (tan $\delta$ values) and the modulus values (the real part of the complex dynamic modulus, designated $G^1$) given herein are measured on the Rheometrics Mechanical Spectrometer (RMS-605) in accordance with the procedures described in Section 6.4 (Forced torsional Oscillation) of the Operations Manual published by Rheometrics Inc. (Issue 0381), using a strain rate of 1% and a frequency sweep from 0.1 to 100 Hz.

Preferred compositions used in the invention have a damping coefficient which meets at least one of the following requirements:

(a) at least 0.1, preferably at least 0.2, especially at least 0.3, at all frequencies in the range 10 to 100 Hz, preferably 1 to 100 Hz, at all temperatures in the range 5°C to 15°C, preferably 0° to 25°C;

(b) at least 0.30, preferably at least 0.35, at at least one frequency in the range 1 to 100 Hz, preferably 10 to 100 Hz, at at least one temperature in the range 0° to 25°C, preferably 5° to 15°C.

It is also preferred that the composition should have a modulus ($G^1$) of at least 0.7, preferably at least 1.0, x $10^7$ dynes/cm$^2$, at all frequencies in the range 10 to 100 Hz, preferably 1 to 100 Hz, at all temperatures in the range 5° to 15°C, preferably 0° to 25°C.

Polyurethanes suitable for use in this invention are commercially available, and referance may be made for example to Polymer Engineering and Science, Sept. 1971, volume 11, No. 15, pages 369-376. Polyether urethane block polymers are preferred because they have better hydrolytic stability.

Elastomers suitable for use in this invention are also commercially available. Suitable elastomers include acrylic rubbers (including alkyl acrylate rubbers, which are preferred, and alkoxy acrylate rubbers), fluoroelastomers (in particular vinylidene fluoride/hexafluoropropylene rubbers), vinyl acetate/ethylene copolymer rubbers (eg. containing 55-75% by weight of vinyl acetate), ethylene/acrylic elastomers nitrile elastomers and mixtures of two or more of these.

The specific gravity of the polymeric composition is preferably less than 1.5, particularly less than 1.3.

Prior to radiation cross-linking, the composition preferably contains a small amount, eg. 0.7 to 4%, of a radiation cross-linking agent, eg. triallyl isocyanurate. The composition may also contain relatively small amounts, usually less than 25%, preferably less than 15%, by weight of the composition of other polymers and/or other additives, including, in particular, fillers, e.g. carbon black in the amount of 5-12%. The presence of such additives generally has an adverse effect on damping, but may be desirable for other reasons, eg. to improve processability or for UV stabilization. The additives, if present, should not be extracted by the acoustic fluid or by sea water.

EXAMPLES

The invention is illustrated by the Examples which are summarized in the Table below. In each of the Examples, the ingredients and amounts thereof (in parts by weight) listed in the Table were thoroughly blended together, e.g. in a Banbury mixer, and then pressed into test slabs (Examples 1-24) or extruded into tubing (Examples 24-27). A number of the test slabs and tubings, as indicated in the Table, were crosslinked by irradiating them to a dosage of 10 Megarads. The damping and modulus characteristics of the test slabs were measured and the results shown in the Table were obtained.

The various ingredients shown in the Table are further identified below.

2103-80A-E (Upjohn "Pellathane" *2103-80A-/): a polyether polyurethane block copolymer, $T_g$ about -10°C.

Hycar *1042 (Goodrich): a butadiene/acrylonitrile elastomer, $T_g$ about -30°C.

Hycar *4051 (Goodrich): an acrylic rubber, $T_g$ about -18°C.

VAE 711 (Wacker): a vinyl acetate/ethylene copolymer (70% w/w/ vinyl acetate), $T_g$ about -5°C. Viton *A-HV (duPont): a vinylidene fluoride/hexafluoropropene elastomer, $T_g$ about -20°C.

Sterling *SO: a semi-reinforcing oil-type furnace black, particle size about 41 millimicrons.

TAIC: triallyl isocyanurate, a radiation crosslinking agent.

*Trademarks

3

## TABLE

| Example No. | 1* | 2* | 3* | 4 | 5* | 6* | 7* | 8 | 9* | 10* | 11* | 12* | 13* | 14* |
|---|---|---|---|---|---|---|---|---|---|---|---|---|---|---|
| **Polyurethane** | | | | | | | | | | | | | | |
| 2103-80 A-E | 69 | 69 | 59 | 59 | 69 | 69 | 59 | 59 | 64 | 44 | 54 | 54 | 44 | 49 |
| **Elastomer** | | | | | | | | | | | | | | |
| Hycar 1042 | | | | | | | | | 25 | 25 | 20 | 15 | 20 | |
| Hycar 4051 | | | | | | | | | | 20 | 15 | 20 | 25 | |
| VAE 711 | 30 | 30 | 40 | 40 | | | | | | | | | | 40 |
| Viton A-HV | | | | | 30 | 30 | 40 | 40 | | | | | | |
| Filler – Sterling SO | | | | | | | | | 10 | 10 | 10 | 10 | 10 | 10 |
| Crosslinking Agent –TAIC | 1 | 1 | 1 | 1 | 1 | 1 | 1 | 1 | 1 | 1 | 1 | 1 | 1 | 1 |
| Crosslinking Dose (Mrad) | 0 | 10 | 0 | 10 | 0 | 10 | 0 | 10 | 10 | 10 | 10 | 10 | 10 | 10 |
| **Damping Coefficient** | | | | | | | | | | | | | | |
| at 25°C and 100 Hz | 0.25 | 0.28 | 0.38 | 0.31 | 0.18 | 0.15 | 0.28 | 0.07 | 0.26 | 0.30 | 0.20 | 0.27 | 0.31 | 0.28 |
| at 25°C and 10 Hz | 0.14 | 0.18 | 0.21 | 0.18 | 0.11 | 0.09 | 0.20 | 0.10 | 0.16 | 0.19 | 0.13 | 0.17 | 0.22 | 0.18 |
| at 10°C and 100 Hz | 0.28 | 0.28 | 0.54 | 0.33 | 0.25 | 0.19 | – | 0.27 | 0.37 | 0.51 | 0.18 | 0.18 | 0.31 | 0.42 |
| at 10°C and 10 Hz | 0.26 | 0.27 | 0.43 | 0.32 | 0.18 | 0.13 | – | 0.15 | 0.30 | 0.55 | 0.21 | 0.20 | 0.38 | 0.40 |
| at 0°C and 100 Hz | | | | | | | | | | 0.32 | 0.20 | 0.23 | 0.20 | 0.26 |
| at 0°C and 10 Hz | | | | | | | | | | 0.37 | 0.13 | 0.38 | 0.31 | 0.35 |
| **G¹ x 10⁻⁷ (dynes/cm²)** | | | | | | | | | | | | | | |
| at 25°C and 100 Hz | 2.2 | 1.1 | 0.88 | 1.1 | 2.0 | 1.9 | 0.41 | 1.6 | 0.86 | 1.1 | 2.4 | 1.2 | 0.85 | 0.59 |
| at 25°C and 10 Hz | 1.4 | 0.62 | 0.52 | 0.65 | 1.4 | 1.3 | 0.29 | 1.8 | 0.54 | 0.8 | 1.9 | 0.9 | 0.60 | 0.51 |
| at 10°C and 100 Hz | 3.6 | 2.3 | 1.9 | 2.6 | 2.5 | 2.8 | – | 2.3 | 1.5 | 2.0 | 5.0 | 5.7 | 3.6 | 2.1 |
| at 10°C and 10 Hz | 2.0 | 1.2 | 0.8 | 1.2 | 1.5 | 1.8 | – | 1.4 | 0.78 | 1.0 | 3.1 | 4.7 | 1.8 | 1.1 |
| at 0°C and 100 Hz | | | | | | | | | | 0.31 | 2.4 | 4.5 | 4.5 | 3.7 |
| at 0°C and 10 Hz | | | | | | | | | | 1.9 | 1.9 | 2.5 | 3.1 | 2.1 |

$G^1 \times 10^{-7}$ (dynes/cm²)

\* Comparative Examples

## Claims

1. Sonar detection apparatus suitable for towing behind a ship comprising:
   (1) a longitudinally reinforced tube composed of a radiation cross-linked polymeric composition comprising:

4

(a) from 40 to 70 percent by weight, based on the total polymer, of an elastomer other than component (6) having a glass transition temperature of from -40° C to +15° C; and
(b) from 60 to 30 percent by weight, based on the total polymer, of a segmented urethane block polymer.

the composition having a damping coefficient of at least 0.1 at at least one frequency in the range from 1 Hz to 100 Hz at at least one temperature in the range from 0° C to 25° C;
(2) a plurality of hydrophones within said tube; and
(3) an acoustic coupling fluid between the tube and the hydrophones.

2. Apparatus according to claim 1, wherein said elastomer is selected from the group consisting of acrylic rubbers, fluoroelastomers, vinyl acetate/ethylene copolymers, ethylene/acrylic elastomers, nitrile elastomers, and mixtures thereof.

3. Apparatus according to claim 2, which contains 50 to 60% of the elastomer.

4. Apparatus according to claim 1, wherein said urethane block polymer is a polyether urethane block polymer.

5. Apparatus according to claim 1, wherein said composition has a damping coefficient of at least 0.20 at all frequencies in the range from 10 Hz to 100 Hz at all temperatures in the range from 5° C to 15° C.

6. Apparatus according to claim 5, wherein said composition has a modulus of at least $1.0 \times 10^7$ dynes/cm² at all frequencies in the range 10 to 100 Hz, at all temperatures in the range 5 to 15° C.

7. Apparatus according to claim 1, wherein the tube has an outer diameter of from 2 to 10 centimetres and a wall thickness which is from 2 to 8 millimetres and from 0.05 to 0.15 times the outer diameter.

8. Apparatus according to claim 1, wherein the composition has a damping coefficient of at least 0.20 at all frequencies in the range from 1 Hz to 100 Hz at all temperatures in the range from 0° C to 25° C.

9. Apparatus according to claim 1, wherein the polymeric composition comprises a radiation crosslinked blend of a polyether urethane block polymer and an elastomer selected from the group consisting of acrylic rubbers, fluoroelastomers, vinyl acetate/ethylene copolymers, ethylene/acrylic elastomers and nitrile elastomers and mixtures of two or more of these.

10. Apparatus according to claim 9, wherein the elastomer is selected from the group consisting of alkyl-acrylate rubbers, vinylidene fluoride/hexafluoropropene copolymers, and vinyl acetate/ethylene copolymers containing 55-75% by weight of vinyl acetate.

11. Apparatus as claimed in any one of claims 1 to 10, wherein the tube has reinforcement comprising reinforcing yarn embedded in the tube wall and running parallel to the longitudinal axis of the tube.

**Revendications**

1. Appareil de détection par sonar convenable pour le remorquage derrière un navire, comprenant :
(1) un tube renforcé longitudinalement, constitué d'une composition polymérique réticulée par radiation, comprenant :
(a) 40 à 70 % en poids, sur la base du polymère total, d'un élastomère, autre que le constituant (b), ayant une température de transition vitreuse de -40° C à +15° C ; et
(b) 60 à 30 % en poids, sur la base du polymère total, d'un polymère d'uréthanne séquencé segmenté,
la composition ayant un coefficient d'amortissement d'au moins 0,1 à au moins une fréquence dans la plage de 1 Hz à 100 Hz, à au moins une température dans la plage de 0° C à 25° C ;
(2) plusieurs hydrophones à l'intérieur de ce tube ; et
(3) un fluide de couplage acoustique entre le tube et les hydrophones.

2. Appareil suivant la revendication 1, dans lequel l'élastomère est choisi dans le groupe comprenant des caoutchoucs acryliques, des élastomères fluorés, des copolymères acétate de vinyle/éthylène, des élastomères éthylène/acryliques, des caoutchoucs nitrile et leurs mélanges.

3. Appareil suivant la revendication 2, qui contient 50 à 60 % de l'élastomère.

4. Appareil suivant la revendication 1, dans lequel le polymère d'uréthanne séquencé est un polymère séquencé polyéther-uréthanne.

5. Appareil suivant la revendication 1, dans lequel la composition possède un coefficient d'amortissement d'au moins 0,20 à toutes les fréquences dans la plage de 10 Hz à 100 Hz à toutes les températures dans la plage de 5° C à 15° C.

6. Appareil suivant la revendication 5, dans lequel la composition possède un module d'au moins 1,0 x $10^7$ dynes/cm$^2$ à toutes les fréquences dans la plage de 10 à 100 Hz à toutes les températures dans la plage de 5 à 15° C.

7. Appareil suivant la revendication 1, dans lequel le tube possède un diamètre extérieur de 2 à 10 cm et une épaisseur de paroi de 2 à 8 mm et de 0,05 à 0,15 fois le diamètre extérieur.

8. Appareil suivant la revendication 1, dans lequel la composition possède un coefficient d'amortissement d'au moins 0,20 à toutes les fréquences dans la plage de 1 Hz à 100 Hz à toutes les températures dans la plage de 0° C à 25° C.

9. Appareil suivant la revendication 1, dans lequel la composition polymérique comprend un mélange, réticulé par radiation, d'un copolymère séquencé polyétheruréthanne et d'un élastomère choisi dans le groupe comprenant des caoutchoucs acryliques, des élastomères fluorés, des copolymères acétate de vinyle/éthylène, des élastomères éthylène/acryliques et des caoutchoucs nitrile ainsi que des mélanges de deux ou plus de deux d'entre eux.

10. Appareil suivant la revendication 9, dans lequel l'élastomère est choisi dans le groupe comprenant des caoutchoucs d'acrylate d'alkyle, des copolymères fluorure de vinylidène/hexafluoropropène et des copolymères acétate de vinyle/éthylène contenant 55 à 75 % en poids d'acétate de vinyle.

11. Appareil suivant l'une quelconque des revendications 1 à 10, dans lequel le tube possède un renforcement consistant en un fil de renforcement noyé dans la paroi du tube et s'étendant parallèlement à l'axe longitudinal du tube.

**Patentansprüche**

1. Schallortungseinrichtung, die zum Schleppen hinter einem Schiff geeignet ist, umfassend:
   (1) ein in Längsrichtung verstärktes Rohr aus einer unter Strahleneinwirkung vernetzten Polymerzusammensetzung, umfassend:
      (a) 40-70 Gew.-%, bezogen auf das Gesamtpolymer, eines von Komponente (b) verschiedenen Elastomeren mit einer Glasübergangstemperatur von - 40° C bis + 15° C; und
      (b) 60-30 Gew.-%, bezogen auf das Gesamtpolymer, eines segmentierten Urethanblockpolymeren,
   wobei die Zusammensetzung einen Dämpfungskoeffizienten von wenigstens 0,1 bei wenigstens einer Frequenz im Bereich von 1 Hz bis 100 Hz bei wenigstens einer Temperatur im Bereich von 0° C bis 25° C hat;
   (2) mehrere Hydrophone im Inneren des Rohrs; und
   (3) ein akustisches Kopplungsfluid zwischen dem Rohr und den Hydrophonen.

2. Einrichtung nach Anspruch 1, wobei das Elastomer aus der Gruppe ausgewählt ist, die aus Acrylkautschuken, Fluorelastomeren, Vinylacetat-Ethylen-Copolymeren, Ethylen-Acryl-Elastomeren, Nitrilelastomeren und Gemischen davon besteht.

3. Einrichtung nach Anspruch 2, die 50-60% des Elastomeren enthält.

4. Einrichtung nach Anspruch 1, wobei das Urethanblockpolymer ein Polyetherurethan-Blockpolymer ist.

5. Einrichtung nach Anspruch 1, wobei die Zusammensetzung einen Dämpfungskoeffizienten von wenigstens 0,20 bei sämtlichen Frequenzen im Bereich von 10 Hz bis 100 Hz bei sämtlichen Temperaturen im Bereich von 5°C bis 15°C hat.

6. Einrichtung nach Anspruch 5, wobei die Zusammensetzung einen Modul von wenigstens $1,0 \times 10^7$ Dyn/cm$^2$ bei sämtlichen Frequenzen im Bereich von 10-100 Hz bei sämtlichen Temperaturen im Bereich von 5-15°C hat.

7. Einrichtung nach Anspruch 1, wobei das Rohr einen Außendurchmesser von 2-10 cm und eine Wandstärke von 2-8 mm und von 0,05-0,15mal dem Außendurchmesser hat.

8. Einrichtung nach Anspruch 1, wobei die Zusammensetzung einen Dämpfungskoeffizienten von wenigstens 0,20 bei sämtlichen Frequenzen im Bereich von 1 Hz bis 100 Hz bei sämtlichen Temperaturen im Bereich von 0°C bis 25°C hat.

9. Einrichtung nach Anspruch 1, wobei die Polymerzusammensetzung ein durch Strahleneinwirkung vernetztes Gemisch aus einem Polyetherurethan-Blockpolymeren und einem Elastomeren umfaßt, das aus der Gruppe ausgewählt ist, die aus Acrylkautschuken, Fluorelastomeren, Vinylacetat-Ethylen-Copolymeren, Ethylen-Acryl-Elastomeren und Nitrilelastomeren und Gemischen von zwei oder mehr derselben besteht.

10. Einrichtung nach Anspruch 9 wobei das Elastomer aus der Gruppe ausgewählt ist, die aus Alkylacrylkautschuken, Vinylidenfluorid-Hexafluorpropylen-Copolymeren und 55-75 Gew.-% Vinylacetat enthaltenden Vinylacetat-Ethylen-Copolymeren besteht.

11. Einrichtung nach einem der Ansprüche 1 bis 10, wobei das Rohr eine Verstärkung hat, die ein Verstärkungsgarn umfaßt, das in die Rohrwand eingebettet ist und parallel zur Längsachse des Rohrs verläuft.